# FASCICULE DE BREVET EUROPEEN

(11) **EP 1 358 412 B1**
(45) Date de publication et mention de la délivrance du brevet: **12.08.2009**
(21) Numéro de dépôt: 01996696.9
(22) Date de dépôt: 16.11.2001
(51) Int. Cl.: F16D 13/64

(54) **DISQUE DE FRICTION ET PROCEDE DE FABRICATION D'UNE GARNITURE LE COMPOSANT**
REIBSCHEIBE UND VERFAHREN ZUR HERSTELLUNG
FRICTION DISC AND METHOD FOR MAKING A LINING FORMING IT

(30) Priorité: 20.11.2000 FR 0014928
(43) Date de publication de la demande: 05.11.2003
(73) Titulaire: Valeo Matériaux de Friction, 87020 Limoges cedex 9 (FR)
(72) Inventeur: MARCHISSEAU, Michel, F-87100 Limoges (FR)
(86) Numéro de dépôt international: PCT/FR2001/003593
(87) Numéro de publication internationale: WO 2002/040885

(56) Documents cités:
- EP-A- 0 579 554
- FR-A- 2 583 482
- GB-A- 459 006
- US-A- 2 222 507
- US-A- 2 337 135
- US-A- 4 345 676
- US-A- 4 697 683
- US-A- 4 714 148
- US-A- 4 821 860
- US-A- 5 305 864
- US-A- 6 015 035

## Description

### Domaine technique de l'invention

L'invention propose un disque de friction, notamment d'embrayage à sec de véhicule automobile.

L'invention propose plus particulièrement un disque de friction, notamment d'embrayage à sec pour un véhicule automobile.

### Etat de la technique

De façon connue, le disque de friction comporte un voile de support en forme de rondelle annulaire dont la portion périphérique extérieure est fractionnée en des pales radiales qui présentent, à la faveur de plis, une partie centrale de fixation qui est raccordée à la portion centrale du voile par un pli tangentiel qui forme le pied de la pale et qui est perpendiculaire.

Le pli tangentiel permet un décalage axial de la partie centrale de fixation par rapport au plan général de la portion centrale du voile. Des garnitures de frottement sont fixées de part et d'autre de la portion périphérique extérieure, par exemple par rivetage ou par collage. Chaque garniture de frottement comportant une surface de frottement externe et une surface de fixation interne dont une zone de fixation est fixée sur au moins une face latérale de fixation d'une partie centrale d'une pale radiale qui est décalée axialement en direction de ladite garniture de frottement.

Une telle conception est par exemple illustrée dans le document EP-A-0.579.554 (US-A-5,452,783).

Lorsqu'un tel disque de friction est utilisé pour la transmission du mouvement de rotation du moteur d'un véhicule automobile vers les roues, la portion centrale du voile est reliée à l'arbre primaire d'une boîte de vitesses, soit directement, soit par l'intermédiaire d'organes élastiques.

Lors de son utilisation dans un dispositif d'embrayage, la périphérie radiale du disque de friction, notamment les garnitures de frottement, est serrée axialement entre un plateau pression et un plateau de réaction. Les plateaux étant entraînés en rotation par le volant moteur. Le décalage axial de la partie centrale de fixation des pales par rapport au plan général de la portion centrale du voile et le mécanisme de liaison à la pédale d'embrayage permettant d'obtenir l'application de la charge axiale, depuis une valeur nulle jusqu'à la valeur nominale de cette charge axiale caractéristique du tarage de l'embrayage, pendant une partie du déplacement de la pédale d'embrayage, qui est la phase active d'embrayage. Pendant la phase active d'embrayage, les deux garnitures du disque de friction se rapprochant sur une distance appelée course de progressivité. La représentation graphique de l'effort axial des plateaux de pression sur la friction en fonction du déplacement relatif de deux garnitures sous cet effort est appelée courbe de progressivité. A la fin de la phase d'embrayage suivant le tarage et les caractéristiques de l'embrayage, le décalage axial de la partie centrale de fixation des pales par rapport au plan général de la portion centrale du voile peut être quasiment annulé.

Pendant la phase d'embrayage, la charge axiale de serrage est transmise aux surfaces de frottement des garnitures par les surfaces des plateaux de pression et de réaction en vis-à-vis.

Le décalage axial de la partie centrale de fixation des pales n'est pas annulé pendant cette phase de fonctionnement. Les garnitures de frottement portent donc essentiellement sur les faces latérales de fixation des pales. La répartition des pressions au niveau des surfaces de frottement des garnitures n'est donc pas homogène.

De part ailleurs, au début de la phase active d'embrayage, les vitesses de rotation du volant moteur et de l'arbre primaire de la boîte de vitesses ne sont pas homocinétiques. Cette différence de rotation induit un frottement entre le plateau de pression et l'une des garnitures ainsi qu'entre le plateau de réaction et l'autre garniture.

L'énergie dissipée par le frottement entre les garnitures et les plateaux de pression et de réaction, ainsi que l'échauffement et l'usure induite des garnitures, sont des fonctions croissantes de la pression entre les garnitures de frottement et les plateaux. Ainsi, pendant la phase d'embrayage, l'usure des surfaces de frottement des garnitures de frottement est donc plus rapide en vis-à-vis de leurs zones de fixation.

Les zones des surfaces de fixation des garnitures, qui ne sont pas des zones de fixation et qui ne sont pas en contact du voile de support, sont 'appelées zones libres et elles transmettent une pression plus faible au cours de la phase active d'embrayage et, par conséquent, s'usent moins rapidement.

Ainsi, les zones libres des garnitures sont globalement repoussées par les plateaux, et deviennent plus épaisses au fur et à mesure de l'usure des zones des surfaces de frottement en vis-à-vis des zones de fixation.

De plus, les contraintes et les températures élevées, notamment dans les zones des surfaces de frottement en vis-à-vis des zones de fixation, provoquent des déformations permanentes par exemple par le phénomène de fluage.

Le cumul de ces déformations est appelé incrustation.

L'incrustation se traduit donc par une surépaisseur de matériau de friction au niveau des zones libres, en protubérance par rapport au plan passant par les surfaces de fixation internes des garnitures. Ce matériau de friction des zones libres, en protubérance, entre en contact avec les faces latérales des pales qui sont opposées aux faces latérales de fixation, pendant la phase active d'embrayage, avant que la course de progressivité ne soit terminée.

Dès que des zones libres sont en contact avec la partie périphérique du voile, ces dernières participent à la transmission de l'effort axial exercé par les plateaux de pression et de réaction, à un niveau équivalent à la participation des zones de fixation.

Dans ce cas, si le différentiel des vitesses de rotation entre les deux garnitures de friction et les plateaux de pression et de réaction n'est pas nul, les vitesses d'usure des portions des surfaces de frottement, d'une part en vis-à-vis des zones libres au contact avec le voile, d'autre part, en vis-à-vis des zones de fixation, sont proches.

Plus l'incrustation des garnitures de frottement est importante, plus les zones libres entrent rapidement en contact avec la portion périphérique du voile, au cours de la phase active d'embrayage.

Lorsque les vitesses de rotation du volant moteur et de l'arbre primaire de la boîte de vitesses sont homocinétiques, il n'y a pas de frottement entre les plateaux de pression et de réaction d'une part, et les garnitures d'autre part. L'usure des garnitures n'évolue pas.

Lorsque la phase active d'embrayage est terminée, si le différentiel des vitesses de rotation entre les deux garnitures et les plateaux de pression n'est pas nul, l'embrayage patine. Le patinage de l'embrayage induit des usures qui diminuent les différences d'épaisseur des zones libres entre les garnitures jusqu'à l'uniformisation des épaisseurs de ces zones libres.

Lorsque les garnitures ne sont pas incrustées, la courbe de progressivité de la friction est une fonction monotone, croissante et continue. La pente de cette courbe croit avec le rapprochement relatif des deux garnitures, jusqu'à une valeur finie.

Lorsque les garnitures sont incrustées, nous pouvons distinguer deux périodes. La première période correspond au déplacement relatif entre deux garnitures depuis l'état libre jusqu'à ce que la première zone libre la plus épaisse entre en contact avec le voile de support. La partie de la courbe de progressivité correspondant à cette première période reste monotone, croissante et continue. La seconde période correspond à l'application résiduelle de la charge axiale transmise par les plateaux de pression. La partie complémentaire de la courbe de progressivité correspond à cette seconde période commence par un point anguleux avec une importante augmentation de la pente. Généralement, la pente tend vers l'infini vers la fin de cette seconde période. La course de progressivité est réduite.

L'incrustation a donc un impact négatif sur le confort de conduite du véhicule lors de la phase d'embrayage. En effet, lors du passage de la première à la seconde période, le couple transmis par le disque de friction en fonction de l'effort axial, c'est-à-dire du déplacement axial des plateaux de pression et de réaction le vers l'autre, varie brusquement.

La variation brusque de transmission du couple provoque un à-coup qui nuit au confort de conduite du véhicule.

Lors de la première période, la transmission du couple est réalisée en grande partie par les zones de la surface externe de frottement des garnitures en vis-à-vis des zones de fixation.

Lors de la seconde période, la transmission du couple est réalisée par quasiment toute la surface externe de frottement des garnitures.

### Objet de l'invention

La présente invention permet notamment d'augmenter la durée d'utilisation du disque de friction pendant laquelle l'incrustation n'a pas d'impact négatif sur le confort. De façon à augmenter la durée pendant laquelle le confort de conduite du véhicule est optimal.

L'invention permet aussi d'homogénéiser la répartition des pressions sur les surfaces de frottement des garnitures, ce qui permet d'une part de réduire la vitesse d'incrustation ainsi que la vitesse d'usure et, d'autre part, d'accroître les performances de l'embrayage, c'est-à-dire que pour des surfaces de frottement des garnitures identiques, le disque de friction selon l'invention présente une durée de vie accrue et permet de transmettre un couple plus élevé.

Dans ce but, l'invention propose un disque de friction, notamment d'embrayage à sec de véhicule automobile, comportant un voile de support en forme de rondelle annulaire comprenant une portion centrale et une portion périphérique extérieure fractionnée en des pales radiales présentant une partie centrale de fixation raccordée à la portion centrale du voile par un pli tangentiel qui forme le pied de la pale et permet un décalage axial de la partie centrale de fixation par rapport au plan général de la portion centrale du voile, et comportant des garnitures de frottement de part et d'autre de la portion périphérique extérieure, chaque garniture de frottement comportant une surface de frottement externe et une surface de fixation interne dont une zone de fixation est fixée sur au moins une face latérale de fixation d'une partie centrale d'une pale radiale qui est décalée axialement en direction de ladite garniture de frottement, **caractérisé en ce qu**'une surface interne d'une garniture de frottement comporte une zone d'épaisseur réduite ou amincie, dans une zone distincte des zones de fixation, de façon à réduire localement l'épaisseur axiale de la garniture de frottement et en ce qu'au moins un élément de renfort s'étend en vis-à-vis d'au moins une partie d'une zone d'épaisseur réduite de la garniture de frottement de façon à favoriser la répartition homogène des pressions sur la surface de frottement de la garniture lorsqu'elle est sollicitée axialement par un plateau complémentaire.

Grâce à l'invention on réduit la quantité de matériau de frottement tout en ayant une bonne tenue mécanique des garnitures de frottement grâce à l'élément de renfort, en sorte que la solution est économique.

Selon d'autres caractéristiques de l'invention :
- pour une bonne répartition des pressions et un bon parallélisme des garnitures de friction l'une au moins des pales radiales présente en plus de la partie centrale, au moins une partie périphérique de portée dont une face latérale de portée vient en appui sur une zone de portée de la surface interne d'une garniture qui est opposée à la garniture sur la surface interne de laquelle est fixée la face latérale de fixation de la partie centrale de la pale radiale ;
- l'élément de renfort s'étend au moins partiellement en vis-à-vis d'une face latérale de portée d'une partie périphérique d'une pale radiale ;
- au moins un élément de renfort s'étend sensiblement en vis-à-vis de la périphérie interne de la surface interne d'au moins une garniture de frottement ;
- plusieurs éléments de renfort agencés entre la surface interne d'une garniture et le voile du support sont reliés entre eux pour constituer un élément unique ;
- l'élément unique comporte un anneau dont le diamètre intérieur correspond sensiblement au diamètre intérieur de la garniture en vis-à-vis de laquelle il s'étend, et des branches qui s'étendent radialement depuis le diamètre extérieur de l'anneau vers la périphérie extérieure de la garniture ;
- une au moins des branches s'étend en vis-à-vis d'une face latérale de portée d'une partie périphérique d'une pale radiale ;
- l'élément de renfort comporte un secteur de renfort en appui contre au moins une partie de la zone d'épaisseur réduite, et au moins une patte de soutien qui s'étend axialement à partir du secteur de renfort en direction du voile contre lequel elle prend appui de façon à améliorer l'homogénéité de la répartition des pressions sur la surface de frottement de la garniture de frottement ;
- au moins une patte de soutien prend appui sur la face latérale opposée à la face latérale de fixation de la pale en vis-à-vis ;
- au moins une patte de soutien prend appui sur la face latérale en vis-à-vis de la portion centrale du voile radiale ;
- la patte de soutien est réalisée en matériau élastique de façon qu'elle subisse une déformation axiale qui est fonction de l'effort axial exercé, par un plateau, sur la surface de frottement de la garniture en vis-à-vis ;
- au moins une patte de soutien est obtenue par découpage et/ou pliage de l'élément de renfort à laquelle elle appartient ;
- au moins l'une des garnitures est constituée de blocs ou pavés délimités par des bords d'orientation globalement radiale ;
- au moins l'une des garnitures est constituée d'un anneau continu.

L'invention propose aussi un procédé de fabrication d'une garniture de frottement, pour un disque de friction d'embrayage de véhicule automobile tel que décrit précédemment, **caractérisé en ce qu**'il comporte une étape de cuisson du matériau de friction de la garniture de frottement dans un moule dont la zone qui est en contact avec la surface de fixation de la garniture comporte au moins un bossage, de façon à réaliser au moins une zone d'épaisseur réduite ou amincie.

Selon d'autres caractéristiques du procédé :
- le matériau de friction est injecté dans le moule ;
- il comporte une étape d'usinage de la face de fixation de la garniture de frottement de façon à réaliser au moins une zone d'épaisseur réduite ou amincie ;
- au moins un élément de renfort est fixé sur un élément du disque de friction ;
- au moins un élément de renfort est fixé sur le voile de support ;
- au moins un élément de renfort est fixé sur la garniture de frottement ;
- la garniture de frottement est réalisée par surmoulage autour d'un élément de renfort ;
- au moins un élément de renfort est collé sur un élément du disque de friction ;
- au moins un élément de renfort est riveté sur un élément du disque de friction ;
- au moins l'une des garnitures est collée sur une surface de fixation d'une pale radiale du voile de support.

### Description sommaire des dessins

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'un dispositif de friction équipée d'un disque de friction ;
- la figure 2 est une vue en perspective d'un voile de support d'un disque de friction ;
- la figure 3 est une vue en perspective éclatée d'un disque de friction selon l'état de la technique ;
- la figure 4 est une vue en bout d'un disque de friction selon l'état de la technique à l'état neuf, assemblé et dans un état correspondant à la position ouverte de l'embrayage ;
- la figure 5 est une vue en bout similaire à celle représentée à la figure 4, à plus grande échelle, le disque de friction étant représenté dans un état correspondant à la position fermée de l'embrayage;
- la figure 6 est une vue en bout similaire à celle représentée à la figure 4, à plus grande échelle, les garnitures de frottement du disque de friction étant incrustées;
- la figure 7 une vue en bout similaire à celle représentée à la figure 6, le disque de friction étant représenté dans un état correspondant à la position fermée de l'embrayage;
- la figure 8 est une vue en perspective éclatée d'un disque de friction réalisé conformément à l'invention ;
- la figure 9 est une vue en bout d'un disque de friction selon l'invention à l'état neuf, assemblé et dans un état correspondant à la position ouverte de l'embrayage ;
- la figure 10 est une vue en bout similaire à celle représentée à la figure 9, le disque de friction étant représenté dans un état correspondant à la position fermée de l'embrayage et les garnitures étant usées ;
- la figure 11 est une vue en perspective éclatée d'un disque de friction comportant un élément de renfort selon une première variante de l'invention ;
- figure 12 est une vue en bout d'un disque de friction selon la première variante de l'invention ;
- la figure 13 est une vue en perspective éclatée d'un disque de friction comportant un élément de renfort selon une seconde variante de l'invention ;
- la figure 14 est une vue en section selon la ligne 14-14 représentée à la figure 13 ;
- la figure 15 est une vue en section selon la ligne 15-15 représentée à la figure 13.

### Description de mode de réalisations préférentiels de l'invention

Dans la suite de la description, une orientation axiale et transversale sera utilisée à titre non limitatif conformément à l'orientation de l'axe de rotation X-X du disque de friction et à un plan transversal qui lui est perpendiculaire. De plus, on utilisera une orientation interne, externe par rapport au plan transversal médian du disque de friction.

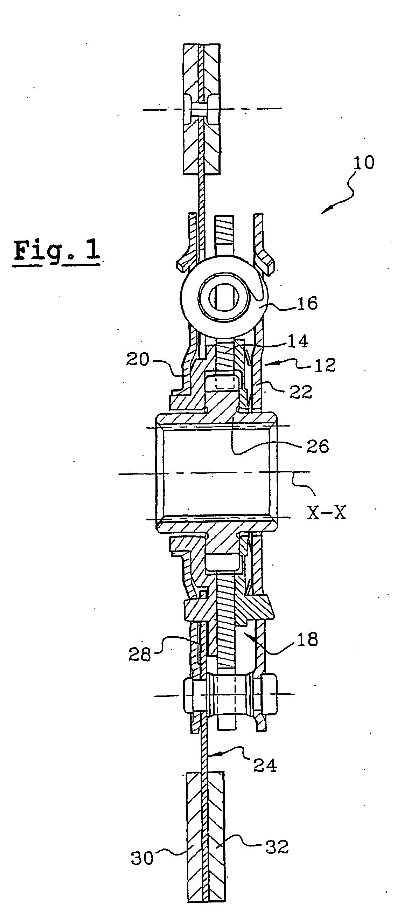

La figure 1 représente une vue en coupe axiale d'un dispositif de friction 10 destiné notamment à la réalisation d'un embrayage de véhicule automobile.

Un tel dispositif est décrit dans le document EP-A-0 579 554 auquel on se reportera pour plus de précisions.

Ainsi le dispositif de friction 10 comporte une première et une seconde parties coaxiales 12, 14 respectivement, montées mobiles l'une par rapport à l'autre à l'encontre d'organes élastiques 16 à action circonférentielle et des moyens de frottement 18 à action axiale.

À titre d'exemple, la première partie coaxiale 12 comporte deux rondelles de guidage 20 et 22.

Un disque de friction 24 est fixé, par exemple par rivetage, sur la rondelle 20.

La seconde partie coaxiale 14 est solidaire d'un moyeu 26 destiné à entraîner en rotation à l'arbre primaire d'axe de rotation X-X d'une boîte de vitesses non représentée.

Le disque de friction 24 est principalement constitué d'un voile 28 de support sur la périphérie annulaire extérieure duquel sont rapportées des garnitures de frottement ou de friction 30 et 32.

Le voile 28 est une pièce en tôle mince découpée et pliée.

Les garnitures de frottement 30 et 32 peuvent être constituées d'un anneau continu, ou de blocs à des délimitée par des bords d'orientation globalement radiale.

Les garnitures 30 et 32 sont réalisées en matériau de friction tel qu'un matériau composite ou un matériau céramique. Elles ont une épaisseur E sensiblement constante.

Ainsi, lors d'une phase d'embrayage, des plateaux de pression et de réaction (non représentés), qui sont solidaires du volant moteur, viennent serrer axialement progressivement les faces de frottement 34 et 36 des garnitures de frottement 30 et 32 respectivement, de façon à entraîner en rotation l'arbre primaire de la boîte de vitesses par l'intermédiaire du disque de friction 10.

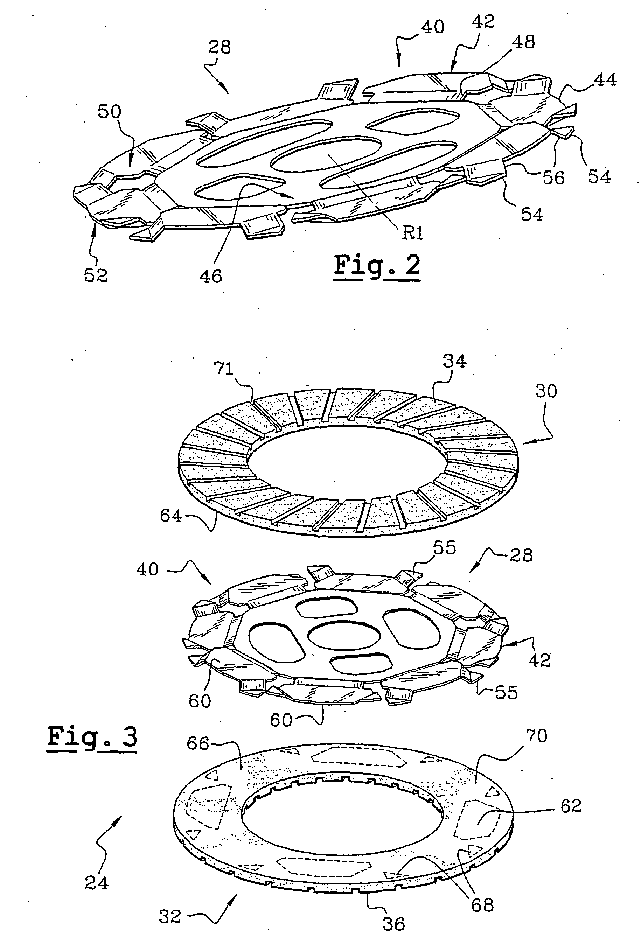

La figure 2 représente en perspective le voile de support 28 en forme de rondelle annulaire dont la portion périphérique extérieure 40 est ici fractionnée en des pales radiales 42 et dont la portion centrale 46 comporte des fenêtres de dégagement pour les organes élastiques 16 ici en forme de ressorts à boudin.

Chaque pale radiale 42 est constituée d'une partie centrale de fixation 44 raccordée à une portion centrale 46 du voile 28 par un pli tangentiel 48 qui forme le pied de la pale 42 et qui permet un décalage axial de la partie centrale de fixation 44 par rapport au plan général de la portion centrale 46 du voile 28.

Le pli 48 s'étend perpendiculairement à l'axe de symétrie radiale R1 de la pale 42.

Le plan de la portion centrale 46 définit un plan transversal médian du disque de friction 24.

Le voile 28 comporte ici huit pales radiales 42 qui sont réparties angulairement de manière régulière autour de l'axe X-X.

Les pales radiales 42 sont alternativement décalées axialement par rapport à la potion centrale 46 de façon que les parties centrales 44 définissent un plan supérieur 50 et un plan inférieur 52, par rapport au plan transversal médian de la portion centrale 46 du voile 28, conformément notamment à la figure 2.

Selon une conception connue, notamment du document EP-A-0.579.554, chaque pale 42 est du type dit "tripode". Ainsi, chaque pale radiale 42 présente en plus de la partie centrale de fixation 44, deux parties périphériques de portée 54.

Chaque pale tripode 42 présente une symétrie générale de conception par rapport à un axe radial médian R1.

Ainsi, les deux parties périphériques de portée 54 sont agencées tangentiellement de part et d'autre de la partie centrale de fixation 44 qui présente elle-même une symétrie de conception rapport à l'axe de symétrie radiale R1.

Les deux parties périphériques de portée 54 sont planes. Elles sont situées dans un plan décalé axialement. Ici, elles sont situées dans le plan supérieur 50 lorsque la partie centrale de fixation 44 est située dans le plan inférieur 52 et inversement.

Les parties périphériques de portée 54 d'une pale 42 sont raccordées à la partie centrale de fixation 44 par un pli 56.

Ainsi, les plans supérieurs 50 et inférieur 52 comportent la partie centrale de fixation 44 d'une pale radiale 42 et les deux paires de partie périphérique de portée 54 des deux pales radiales 42 adjacentes.

Lors de l'assemblage du disque de friction 24, une face latérale de fixation 60 de chaque partie centrale de fixation 44 vient en contact sur une zone de fixation 62, délimitée par des traits pointillés sur les figures, notamment sur la figure 3, d'une face de fixation interne 64 et 66 des garnitures de frottement 30 et 32 respectivement.

La fixation des parties centrales 44 et des garnitures de frottement 30 et 32 peut être réalisée par rivetage ou avantageusement par collage pour réduire l'inertie du disque de friction et/ou autoriser une plus grande usure des garnitures de frottement.

De plus, des faces latérales de portée 55 des parties périphériques de portée 54 d'une partie centrale de fixation 44 viennent en appui sur des zones de portée 68, délimitées par des traits pointillés sur les figures, de la garniture 32, 30 opposée à celle sur laquelle est fixée la partie centrale 44 correspondante.

Ici, les faces latérales de portée 55 sont simplement en appui sur les zones de portée 68 en vis-à-vis, de façon à permettre le glissement des parties périphériques de portée 54 par rapport à la garniture 30, 32 correspondante lors de la phase d'embrayage qui provoque le rapprochement axial des garnitures 32, 30, et par conséquent la déformation du voile 28.

Les zones des surfaces de fixation interne 64 et 66 des garnitures de frottement 30 et 32 qui ne sont ni des zones de fixation 62, ni des zones de portée 68 sont appelées zones libres 70.

De façon à optimiser le refroidissement des garnitures de frottement 30 et 32, les faces de frottement 34 et 36 comportent des rainures 71 d'orientation globalement radiale et légèrement inclinée par rapport à une direction radiale.

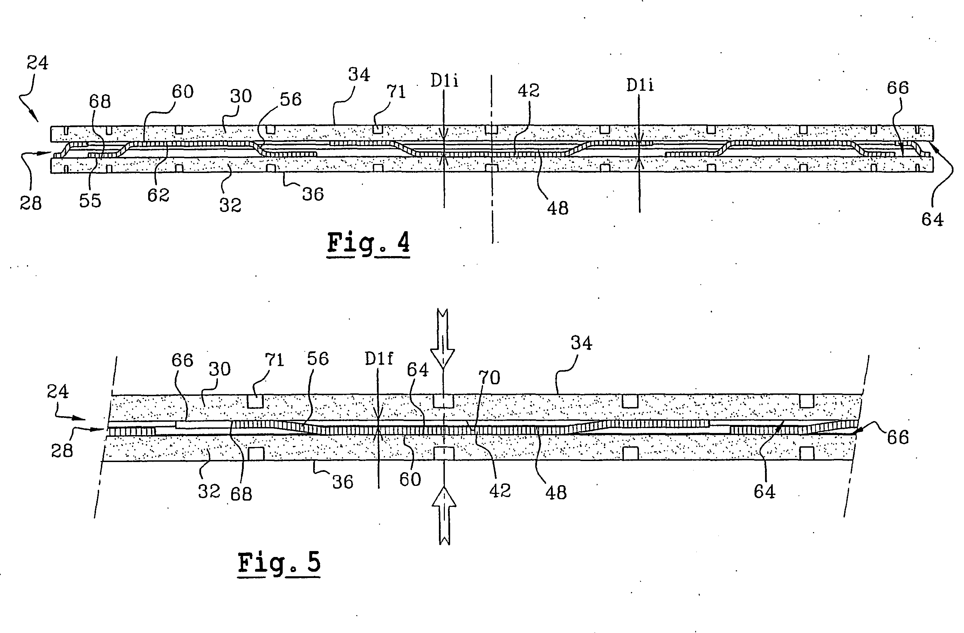

La figure 4 représente en vue en bout le disque de friction 24 assemblé dans une position appelée position ouverte. Le disque de friction est à l'état neuf, c'est-à-dire que les surfaces de frottement externes 34 et 36 des garnitures de frottement 30 et 32 ne sont pas usées.

Les surfaces de fixation 64 et 66 des garnitures de frottement 30 et 32 et les faces latérales des pales 42 qui sont opposées aux faces latérales de fixation 60 sont séparées par une distance D, ici distance initiale D1i.

On retrouve cette distance D1i entre les surfaces de fixation 64 et 66 des garnitures de frottement 30 et 32 et les faces des parties périphériques de portée 54 qui sont opposées aux faces de portée 55.

Lors d'une phase d'embrayage, les plateaux de pression et de réaction viennent en contact des surfaces de frottement externes 34 et 36 des garnitures de frottement 30 et 32. Chaque plateau exerce un effort axial opposé qui tend à rapprocher axialement les garnitures de frottement 30 et 32. Les vitesses du disque de friction 24 et des plateaux n'étant pas homocinétiques, il se produit un frottement des surfaces en contact qui tend à entraîner en rotation le disque de friction 24.

Les efforts axiaux opposés des plateaux compriment axialement le disque de friction 24 de façon à déformer le voile 28, notamment les plis 48 et 56, jusqu'à une position serrée dans laquelle l'effort résistant du voile. 28 est égal aux efforts axiaux opposés.

La figure 5 représente en vue en bout le disque de friction 24 à l'état neuf dans sa position serrée.

Ainsi, au cours de la phase d'embrayage la déformation des plis 48 et 56 permet d'assurer la progressivité de l'embrayage.

Dans cette position les surfaces de fixation 64 et 66 des garnitures de frottement 30 et 32, et les faces latérales des pales 42 qui sont opposées aux faces latérales de fixation 60 sont séparées par une distance finale D1f.

Cependant, l'utilisation du disque de friction 24 provoque l'usure des surfaces de frottement 34 et 36 des garnitures de frottement .30 et 32, ainsi que des déformations de ces dernières.

L'usure des garnitures de friction 30 et 32 est proportionnelle aux pressions de frottement exercées. Ainsi, l'usure des surfaces de frottement 34 et 36 sera plus importante dans les zones en vis-à-vis des zones de fixation 62 et des zones de portée 68 des surfaces de fixation 64 et 66 respectivement.

Bien que les garnitures 30 et 32 soient moins usées en vis-à-vis des zones libres 70, elles subissent des déformations, c'est-à-dire que l'épaisseur des garnitures 30 et 32 en vis-à-vis des zones libres 70 est déformée, globalement repoussée, par les plateaux vers le voile 28. C'est le phénomène d'incrustation.

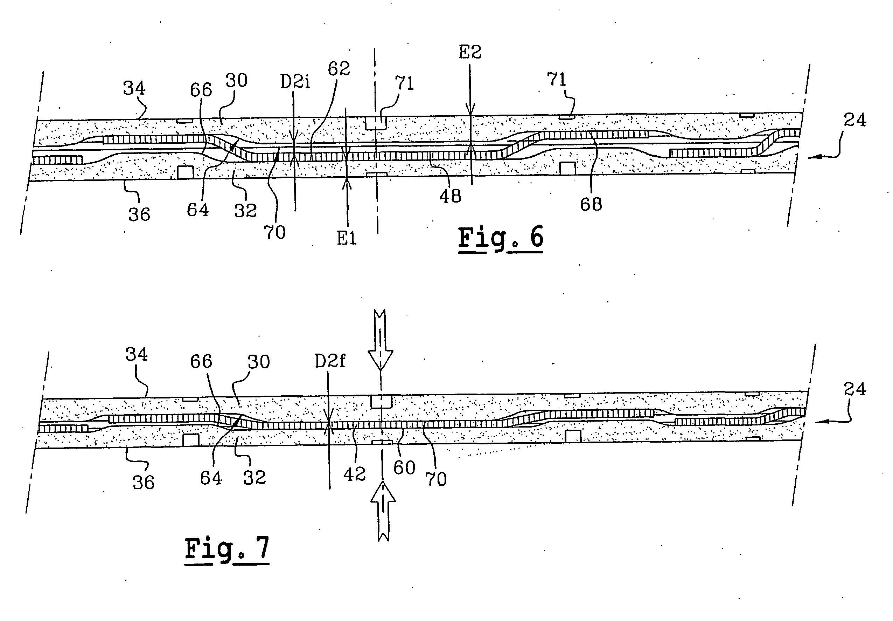

La figure 6 représente le disque de friction 24 usagé en position ouverte.

On constate alors que les garnitures 30 et 32 n'ont plus une épaisseur constante E. Les zones en vis-à-vis des zones de fixation 62 et des zones de portée 68 des surfaces de fixation 64 et 66 respectivement ont une première épaisseur E1 réduite, et les zones en vis-à-vis des zones libres 70 ont une seconde épaisseur E2 supérieure à la première épaisseur E1.

Ici, les dimensions des zones en vis-à-vis des parties centrales 44 sont plus grandes que celles des parties périphériques de portée 54 et leur déformation est plus importante.

La figure 6 illustre la déformation des zones en vis-à-vis des zones libres 70. La distance D2i qui sépare les surfaces de fixation 64 et 66 des garnitures de frottement 30 et 32, et les faces latérales des pales 42 qui sont opposées aux faces latérales de fixation 60, est réduite par rapport à la distance D1i.

Ainsi, lorsque l'incrustation est supérieure un premier seuil, ou lorsque la distance D2i est inférieure un second seuil, la progressivité de l'embrayage n'est plus régulière.

En effet, il se produit deux périodes telles que décrites précédemment.

Au cours de la première période, la progressivité de l'embrayage est régulière, cependant le passage à la seconde période provoque un à-coup qui correspond à l'entrée en contact d'une zone libre 70 d'une surface de fixation 64 ou 66 avec la face latérale d'une pale 42 qui est opposée à la face latérale de fixation 60.

La figure 7 représente le disque de friction 24 usagé en position serrée de l'embrayage. Les zones libres 70 des surfaces de fixation 64 ou 66 sont en contact avec la face latérale d'une pale 42 qui est opposée à la face latérale de fixation 60, la distance D2f est nulle.

Si la déformation des zones libres 70 n'est pas régulière autour de l'axe X-X, il peut se produire plusieurs à-coups qui correspondent chacun à l'entrée en contact d'une zone libre 70 d'une surface de fixation 64 ou 66 avec une face latérale d'une pale 42 qui est opposée à la face latérale de fixation 60.

Afin d'augmenter la durée d'utilisation du disque de friction 24 pendant laquelle les phénomènes d'incrustation et de déformation ne modifient pas la progressivité de l'embrayage, il est proposé de réduire ou d'amincir une partie des zones libres 70 de façon à réduire localement l'épaisseur axiale des garnitures de frottement 30, 32. Les zones ainsi réalisées sont appelées zones d'épaisseur réduite 72.

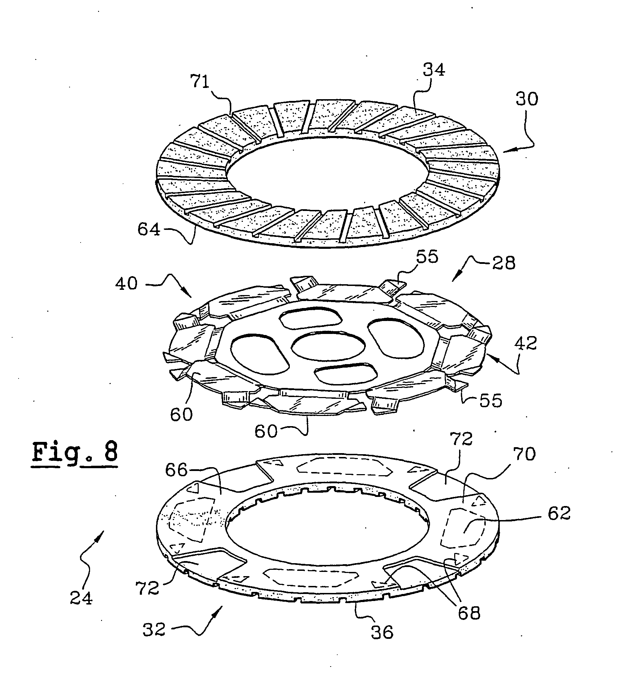

La figure 8 représente en perspective éclatée une telle réalisation. Les zones d'épaisseur réduite 72 ont ici été réalisées uniquement dans les zones en vis-à-vis des faces latérales des pales 42 qui sont opposées aux faces latérales de fixation 60.

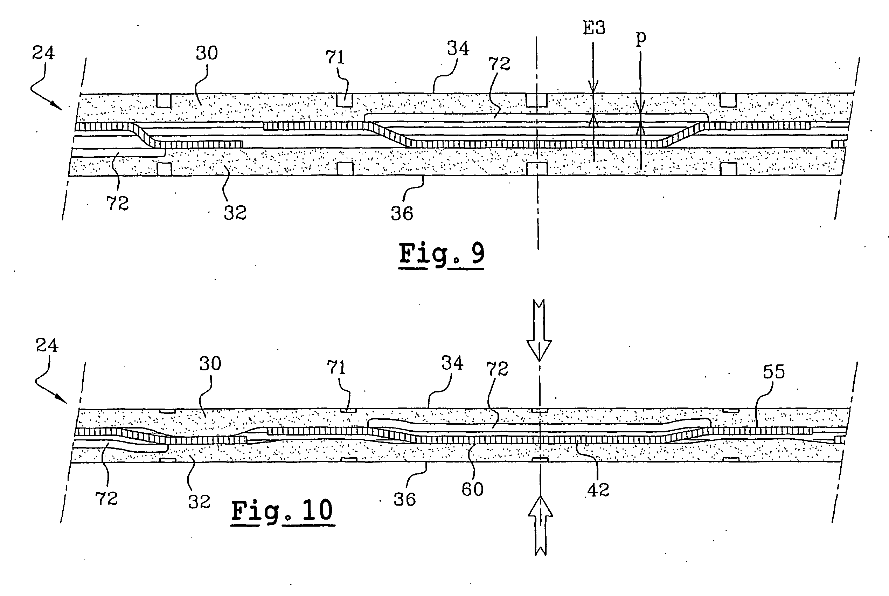

La figure 9 est une vue en bout du disque de friction 24 à l'état neuf selon l'invention dans la position ouverte de l'embrayage.

Avantageusement, l'épaisseur E3 des garnitures de frottement 30 et 32 dans les zones d'épaisseur réduite 72 et la profondeur P des zones d'épaisseur réduite 72 sont déterminées pour que, lorsque les garnitures 30, 32 ont atteint leur usure maximale.

La course de progressivité n'est pas sensiblement modifiée par rapport à l'état neuf.

Ici, bien que les zones libres 70 en vis-à-vis des parties périphériques de portée 54 ne soient pas des zones d'épaisseur réduite 72, la durée d'utilisation du disque de friction 24 pendant laquelle les phénomènes d'incrustation ne modifient pas la progressivité de l'embrayage, est supérieure à la durée de vie du disque de friction, selon l'état technique. En effet, ces zones libres 70 ont un porte-à-faux très inférieur au porte-à-faux des zones libres 70 en vis-à-vis des parties centrales 44. La vitesse d'incrustation des zones libres 70 en vis-à-vis des parties périphériques de portée 54 est donc beaucoup plus faible que la vitesse d'incrustation des zones libres 70 en vis-à-vis des parties centrales 44.

Le disque de friction 24 permet aussi de réduire la quantité de matériau de frottement mise en oeuvre pour sa fabrication. La masse des garnitures de frottement 30 et 32 est diminuée, ce qui réduit leur inertie et qui permet d'accroître la vitesse de rotation ou de centrifugation du disque de friction 24. En effet, les contraintes qui résultent de la rotation du disque de friction 24 sont plus faibles pour une même vitesse de rotation.

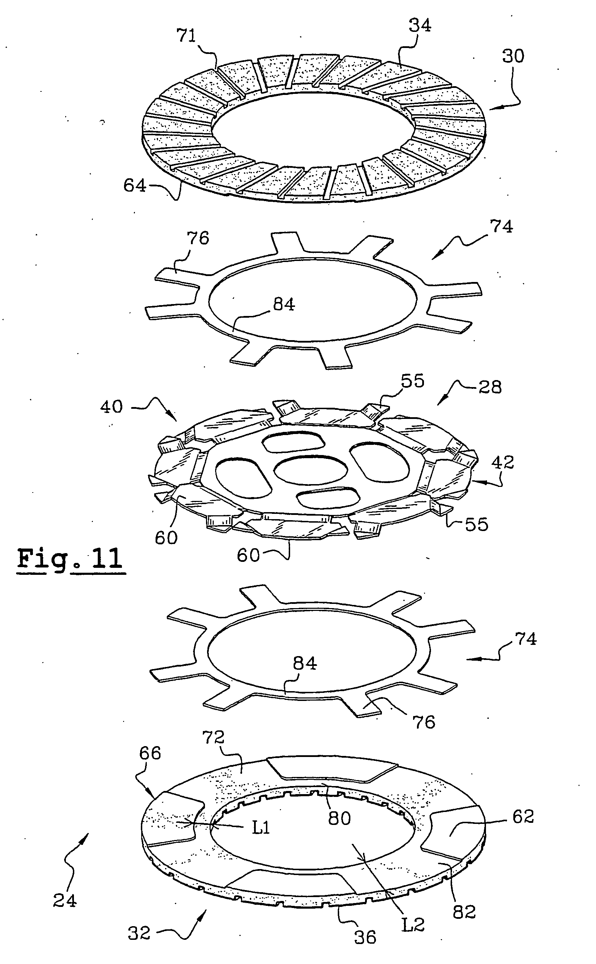

Selon une première forme de réalisation de l'invention, conformément à la figure 11, les zones d'épaisseur réduite 72 correspondent à toutes les zones des surfaces de fixation 64 et 66 des garnitures de frottement 30 et 32 qui sont distinctes des zones de fixation 62.

De façon à favoriser la répartition homogène des pressions sur les surfaces de frottement 34 et 36 lorsqu'elles sont sollicitées axialement par les plateaux de pression et de réaction, selon l'invention un élément de renfort 74 tel qu'une branche 76 s'étend sur le fond des zones d'épaisseur réduite 72.

L'élément de renfort 74 est fabriqué dans un matériau, tel que de l'acier ou un matériau plastique dont les caractéristiques mécaniques sont plus élevées que celles du matériau de friction des garnitures 30 et 32, de façon à résister sans dommage à des pressions plus élevées.

Chaque élément de renfort 74 peut être simplement interposé entre une garniture de frottement 30 ou 32 et le voile de support 28. Il peut aussi être fixé sur le voile de support 28 ou sur une garniture 30 ou 32 par exemple par collage, rivetage ou soudage.

Il est aussi possible que l'une des garnitures de frottement 30 ou 32 soit réalisée par surmoulage autour d'un élément de renfort 74.

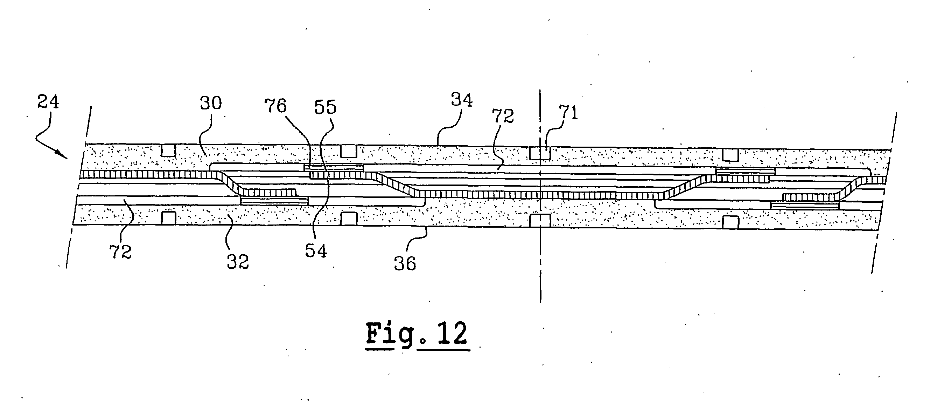

Tel que représenté sur la vue en bout du disque de friction de la figure 12, les branches 76 s'étendent avantageusement en vis-à-vis d'une face latérale de portée 55 d'une partie périphérique de portée 54.

De façon à éviter les vibrations des parties périphériques de portée 54, il est nécessaire de supprimer les jeux entre les faces latérales de portée 55 et les branches 76. Ainsi, si l'on désir conserver la mise en forme du voile 28, l'épaisseur des branches 76 est égale à la profondeur P des zones d'épaisseur réduite 72, de façon que la face interne de la branche 76 affleure à la surface de fixation 64, 66 de la garniture de frottement 30, 32.

Ainsi, lorsque les surfaces de frottement 34 et 36 sont sollicitées axialement par les plateaux, les branches 76, dont les dimensions sont supérieures à celles des faces latérales de portée 55, permettent de répartir les efforts exercés par lesdites faces de portée 55 sur une zone plus importante des surfaces de frottement 34 et 36.

Les efforts étant mieux répartis, cela permet de diminuer les pressions de frottement entre les surfaces de frottement 34 et 36, et les plateaux de pression et de réaction, ce qui a pour conséquence de diminuer l'usure des zones des surfaces de frottement 34 et 36 en vis-à-vis des faces latérales de portée 55. La durée de vie du disque de friction 24 est augmentée.

De plus, une telle réalisation permet de diminuer les dimensions des faces de portée 55 et d'augmenter celles des faces latérales de fixation 60 des pales 42. Ainsi lorsque les garnitures 30 et 32 sont fixées sur le voile de support 28 par collage, l'augmentation des dimensions des faces latérales de fixation 60 permet d'augmenter les surfaces de collage et par conséquent d'augmenter la capacité de passage de couple entre les garnitures 30 et 32 et le voile 28.

Selon la figure 11, les zones d'épaisseur réduite 72 correspondent à l'intégralité des surfaces de fixation 64 et 66 des garnitures de frottement 30 et 32 à l'exception les zones de fixation 62.

Ainsi, les zones d'épaisseur réduite 72 comportent une zone annulaire 80 qui s'étend depuis la périphérie interne des surfaces de fixation 64 et 66 des garnitures de frottement 30 et 32 vers l'extérieur jusqu'aux zones de fixation 62. Avantageusement, la largeur L1 des zones annulaires correspond sensiblement au tiers de la largeur L2 des garnitures de frottement 30 et 32. Les zones d'épaisseur réduite 72 comportent aussi des portions d'anneau 82 qui s'étendent entre les zones de fixation 62 depuis la zone annulaire 80 jusqu'à périphérie extérieure des surfaces de fixation 64 et 66 des garnitures 30 et 32.

L'élément de renfort 74 de chaque garniture de frottement 30, 32 peut alors comporter un anneau 84 dont les dimensions correspondent sensiblement à la zone annulaire 80, ainsi que des branches 76 qui sont agencées radialement de part et d'autre de chaque zone de fixation 62 et qui s'étendent depuis le diamètre extérieur de l'anneau 84 vers la périphérie extérieure de la garniture de frottement 30 et 32 correspondante. Ainsi, un élément de renfort 74 unique est rapporté sur la zone d'épaisseur réduite 72 de chaque garniture de frottement 30 et 32.

Ainsi, lorsque les surfaces de frottement 34 et 36 sont sollicitées axialement par les plateaux, les éléments de renfort 74 permettent de répartir les efforts exercés par les faces de portée 55 sur une zone importante des surfaces de frottement 34 et 36. Les pressions de contact entre les garnitures 30 et 32 et plateaux sont ainsi réduites, ce qui permet encore d'augmenter la durée de vie du disque de friction 24.

Avantageusement, les dimensions et notamment l'épaisseur, des éléments de renfort 74, ainsi que le matériau les constituant sont choisis de façon que lorsque les surfaces de frottement 34 et 36 des garnitures de frottement 30 et 32 sont usées, ni les faces internes des éléments de renfort 74, ni les zones libres 70 des surfaces de fixation 64 et 66 ne sont en contact avec une partie du voile pendant toute la phase active d'embrayage. Une telle réalisation permet de conserver l'intégralité de la course de progressivité et la continuité de la courbe de progressivité de l'embrayage tout au long de la durée de vie du dispositif de friction 10.

Cette réalisation permet aussi d'augmenter la tenue à la centrifugation du disque de friction 24.

En effet, lors de la rotation des garnitures de frottement 30 et 32, les contraintes mécaniques induites sont maximales sur le diamètre intérieur des garnitures 30 et 32. Or, le matériau constituant les anneaux 84 présente une résistance mécanique supérieure à celle du matériau constituant les garnitures de frottement 30 et 32, les anneaux 84 permettent alors de renforcer les garnitures de frottement 30 et 32 dans les zones qui sont les sont plus sollicitées mécaniquement.

Il est ainsi possible, pour des dimensions des garnitures 30 et 32 identiques, d'augmenter les contraintes dues à la centrifugation, donc d'augmenter la vitesse de rotation du disque de friction 24, sans risquer sa détérioration.

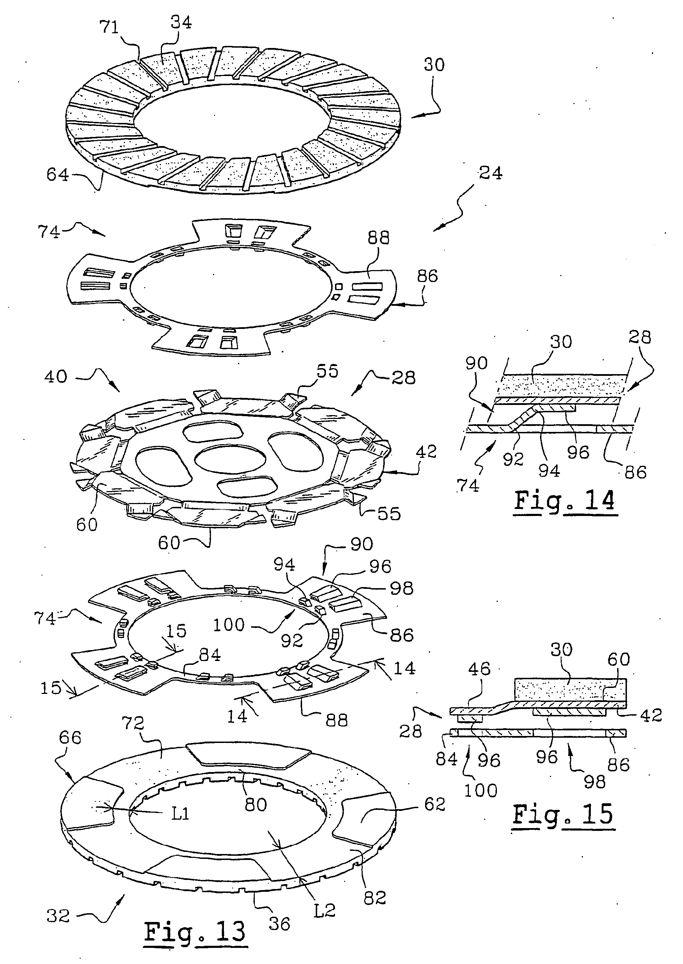

De façon à augmenter encore l'homogénéisation de la répartition des pressions de contact entre les surfaces de frottement 34 et 36 des garnitures 30 et 32, les branches 76 (figure 13) sont reliées deux à deux de façon à former des secteurs de renfort 86 qui s'étendent en vis-à-vis des portions d'anneau 82 des zones d'épaisseur réduite 72, conformément à une seconde variante représentée à la figure 13. Cela permet de diminuer la vitesse d'usure des surfaces de frottement 34 et 36 ainsi que la vitesse d'incrustation pendant la phase d'embrayage.

Selon cette réalisation, les faces externes 88 des secteurs de renfort 86 ou corps sont en appui contre la partie en vis-à-vis de la zone d'épaisseur réduite 72. Les secteurs de renfort 86 comportent des pattes de soutien 90.

Conformément à la figure 14, chaque patte de soutien 90 s'étend globalement axialement à partir d'un secteur de renfort 86 en direction du voile 28 contre lequel elle prend appui, de façon à transmettre les efforts de réaction du voile 28 vers l'une des garnitures de frottement 30 ou 32, lorsque le disque de friction 24 est sollicité axialement par les plateaux de pression et de réaction.

Les pattes de soutien 90 peuvent être réalisées par découpage et pliage d'une partie de l'élément de renfort 74. En effet, on réalise d'abord une découpe en forme de U, inclinée de 90 degrés par rapport à une direction radiale de l'élément de renfort 74. Un premier pliage 92 est formé entre l'extrémité libre de chacune des branches de la découpe de façon que la partie pliée s'étende axialement en direction du voile de support 28, puis un second pliage 94 permet de rabattre l'extrémité libre 96 de la partie pliée dans un plan transversal parallèle à celui de l'élément de renfort 74.

Cette réalisation des pattes de soutien 90 permet de leur conférer une élasticité, notamment selon une direction axiale. Ainsi, lorsque le disque de friction 24 est sollicité axialement par les plateaux de pression et de réaction, elles sont légèrement déformables axialement, en fonction des efforts axiaux exercés par les plateaux sur les surfaces de frottement des garnitures de frottement 30 et 32, ce qui permet de transmettre les efforts de réaction du voile 28 vers l'une des garnitures de frottement 30 ou 32 tout en assurant la progressivité de la phase d'embrayage.

La déformation axiale des pattes de soutien 90 est fonction des efforts axiaux exercés par les plateaux sur les surfaces de frottement des garnitures de frottement 30 et 32.

La déformation axiale des pattes de soutien 90 peut par exemple être proportionnelle ou exponentielle par rapport aux efforts axiaux exercés par les plateaux, c'est à dire qu'il existe une relation linéaire ou exponentielle entre déformation axiale des pattes de soutien 90 et les efforts axiaux exercés par les plateaux respectivement.

L'extrémité libre 96 de la patte de soutien 90 peut prendre appui sur la face latérale opposée de la face latérale de fixation 60 de la pale 42 en vis-à-vis, conformément aux figures 14 et 15.

Dans ce cas il peut être avantageux que la dimension radiale de la patte 98 corresponde sensiblement à la dimension radiale du secteur de renfort 86 sur lequel elle est réalisée de façon à augmenter la surface de l'extrémité libre 96 en contact avec la pale radiale 42 du voile 28.

La patte de soutien 90 peut aussi être réalisée dans l'anneau de renfort 84. Elle est alors référencée 100 et son extrémité libre 96 peut alors prendre appui sur la face latérale en vis-à-vis de la portion centrale 46 du voile radiale 28.

La figure 15, qui est une vue en coupe selon la ligne 15-15 de la figure 13, représente notamment les pattes de soutien 98 et 100 qui sont respectivement en contact avec une pale radiale 42 est la portion centrale 46 du voile 28. Ainsi la patte 98 s'étend axialement sur une distance plus grande que la patte 100.

Les efforts de réaction du voile de support 28 sont alors transmis dans les zones des surfaces de frottement 34 et 36 en vis-à-vis des zones d'épaisseur réduite 72, permettant ainsi une diminution importante de l'incrustation des garnitures 34 et 36 ainsi qu'une répartition homogène des pressions sur la quasi-totalité des surfaces de frottement 34 et 36.

Un tel disque de friction 24 selon l'invention permet une utilisation optimale des garnitures de frottement 34 et 36. En effet, les pressions de frottement sont réparties de façon sensiblement homogène sur la totalité des surfaces de frottement 34 et 36. Ainsi, les différences angulaires des vitesses d'usure des garnitures 34 et 36, ainsi que les phénomènes d'incrustation sont fortement réduits.

Par conséquent, la vitesse d'usure des garnitures 34 et 36 est fortement réduite ce qui permet d'augmenter la durée de vie du disque de friction 24 et son confort d'utilisation pour la phase d'embrayage.

L'invention propose aussi un procédé de fabrication d'une garniture de frottement 30 ou 32, notamment pour un disque de friction 24 d'embrayage de véhicule automobile.

Ainsi, le procédé comporte une étape de cuisson du matériau de friction de la garniture 30 ou 32 dans un moule dont la zone qui est en contact avec la surface de fixation 64 ou 66 de la garniture 30 ou 32 respectivement comporte un bossage de façon à réaliser une zone d'épaisseur réduite ou amincie 72.

Lorsque le matériau de friction de la garniture 30, 32 est à base de fibres, telles que des fibres de verre, le moule peut être constitué en deux parties, chacune des parties comportant une partie de l'empreinte de la garniture 30, 32. Ainsi, le matériau de friction est disposé dans l'une des deux matrices puis l'autre matrice vient en appui contre la première de façon à fermer l'empreinte et à former la garniture 30, 32.

Le matériau de friction peut également être injecté directement dans une empreinte correspondant à la forme extérieure ou enveloppe de la garniture 30, 32.

Le matériau de friction est ensuite durci, par exemple par chauffage avant d'être extrait du moule.

Une variante consiste à réaliser une garniture 30, 32 dont la surface de fixation 64, 66 est plate, puis à usiner cette face de façon à former une zone d'épaisseur réduite 72.

Lorsque la garniture de frottement 30, 32 est terminée, un élément de renfort 74 peut y être fixé par exemple par collage ou par rivetage.

La garniture de friction 30, 32 peut aussi être surmoulés autour de l'élément de renfort 74.

Le collage des garnitures de frottement sur la partie ou zone centrale de fixation 44 du voile de support est avantageusement réalisé à l'aide d'un tampon. Plus précisément on dépose de la colle sur les parties 44 à l'aide d'un tampon qui comporte une zone d'encollage dont la forme correspond à la zone de collage de la face latérale de fixation 60 centrale 44.

Dans une première phase on imprègne la zone d'encollage du tampon par de la colle, puis dans une seconde phase on met en contact sous pression la zone d'encollage imprégnée du tampon et la zone de collage de la face latérale de fixation 60 de la partie centrale 44 de façon à transférer la quantité prédéterminée de la colle du tampon sur la pale comme décrit dans la demande FR00 14929 déposée le 20 novembre 2000 à laquelle on se reportera pour plus de précisions.

Avantageusement l'embrayage comporte un plateau de pression en plusieurs parties appartenant à un dispositif de compensation de l'usure des garnitures de frottement appelé dispositif de rattrapage d'usure.

Ce dispositif de rattrapage d'usure comporte par exemple une cassette présentant un ensemble vis sans fin et roue à rochet porté par le couvercle que comporte l'embrayage comme décrit par exemple dans le document FR-A-2 753 503 auquel on se reportera pour plus de précisions.

Le plateau de pression comporte donc une première partie formant le plateau de pression et portant un anneau à rampes constituant une seconde partie du plateau de pression.

Le disque de friction peut appartenir à un ensemble embrayage à friction-machine électrique tournante comme décrit dans le document FR-A-2 782 355 ; le plateau de réaction étant alors solidaire de la machine électrique tournante.

Pour plus de précisions on se reportera à ce document.

Bien entendu, en variante, la fixation des garnitures de frottement par collage est réalisée selon le procédé décrit dans le document WO-A-98/44272, c'est-à-dire à l'aide de cordons de collage.

On appréciera que la partie de fixation des pales a une grande étendue dans les figures 11 et 13.

Cela est dû au fait que les parties périphériques de portée s'étendent de manière symétrique par rapport à la partie centrale de fixation.

En variante les parties périphériques de portée s'étendent de manière dissymétrique par rapport à la partie centrale de fixation, en sorte que les pales peuvent être en forme de drapeau.

Bien entendu, on peut augmenter la surface de ces zones de portée périphérique. Dans tous les cas l'élément de renfort s'étend en vis-à-vis d'au moins une partie d'une zone d'épaisseur réduite de la garniture de frottement de façon à favoriser la répartition homogène des pressions sur la surface de frottement de la garniture lorsqu'elle est sollicitée axialement par un plateau complémentaire.

On notera que l'élément de renfort des figures 11 et 13 a une faible masse. Les branches 76 et les pattes de soutien 90 alternent circonférentiellement avec les parties centrales 44.

## Revendications

1. Disque de friction (24) comportant un voile de support (28) en forme de rondelle annulaire comprenant une portion centrale (46) et une portion périphérique extérieure fractionnée en des pales radiales (42) présentant une partie centrale (44) de fixation raccordée à la portion centrale (46) du voile (28) par un pli tangentiel (48) qui forme le pied de la pale (42) et permet un décalage axial de la partie centrale (44) de fixation par rapport au plan général de la portion centrale (46) du voile (28), et comportant des garnitures de frottement (30, 32) de part et d'autre de la portion périphérique extérieure (40), chaque garniture de frottement (30, 32) comportant une surface de frottement (34, 36) externe et une surface de fixation (64, 66) interne dont une zone de fixation (62) est fixée sur au moins une face latérale de fixation (60) d'une partie centrale (44) d'une pale radiale (42) qui est décalée axialement en direction de ladite garniture de frottement (30, 32), **caractérisé en ce qu'**une surface de fixation (64, 66) d'une garniture de frottement (30, 32) comporte une zone d'épaisseur réduite (72) ou amincie, dans une zone distincte des zones de fixation (62), de façon à réduire localement l'épaisseur axiale de la garniture de frottement (30, 32) et **en ce qu'**au moins un élément de renfort (74) s'étend en vis-à-vis d'au moins une partie d'une zone d'épaisseur réduite (72) de la garniture de frottement (30, 32) de façon à favoriser la répartition homogène des pressions sur la surface de frottement (34, 36) de la garniture (30, 32) lorsqu'elle est sollicitée axialement par un plateau complémentaire.

2. Disque de friction (24) selon la revendication 1, **caractérisé en ce que** l'une au moins des pales radiales (42) présente en plus de la partie centrale (44), au moins une partie périphérique de portée (54) dont une face latérale de portée (55) vient en appui sur une zone de portée (68) de la surface interne d'une garniture (32, 30) qui est opposée à la garniture (30, 32) sur la surface interne (64, 66) de laquelle est fixée la face latérale de fixation (60) de la partie centrale (44) de la pale radiale (42).

3. Disque de friction selon la revendication 2, **caractérisé en ce que** les zones d'épaisseur réduite (72) correspondent à une zone annulaire (80), qui s'étend depuis la périphérie interne des surfaces de fixation (64,66) des garnitures de frottement (30,32) vers l'extérieur jusqu'aux zones de fixation (62).

4. Disque de friction selon la revendication 3, **caractérisé en ce que** la largeur (L1) de la zone annulaire (80) correspond sensiblement au tiers de la largeur (L2) des garnitures de frottement (30,32).

5. Disque de friction (24) selon la revendication 3, **caractérisé en ce que** les zones d'épaisseur réduites (72) comportent également des portions d'anneaux (82) qui s'étendent entre les zones de fixation (62) depuis la zone annulaire (80) jusqu'à la périphérie extérieure des surfaces de fixation (64,66) des garnitures de frottement (30,32).

6. Disque de friction (24) selon la revendication 1, **caractérisé en ce que** l'élément de renfort (74) est fabriqué dans un matériau, tel que de l'acier ou un matériau plastique, dont les caractéristiques mécaniques sont plus élevées que celles du matériau de friction des garnitures de frottement (30,32).

7. Disque de friction (24) selon la revendication 3, **caractérisé en ce que** l'élément de renfort (74) s'étend au moins partiellement en vis-à-vis d'une face latérale de portée (55) d'une partie périphérique (54) d'une pale radiale (42).

8. Disque de friction (24) selon la revendication 7, **caractérisé en ce qu'**au moins un élément de renfort (74) s'étend sensiblement en vis-à-vis de la périphérie interne de la surface interne (64, 66) d'au moins une garniture de frottement (30, 32).

9. Disque de friction (24) selon la revendication 8, **caractérisé en ce que** plusieurs éléments de renfort (74) agencés entre la surface interne (64, 66) d'une garniture (30, 32) et le voile du support (28) sont reliés entre eux pour constituer un élément unique (74).

10. Disque de friction (24) selon la revendication précédente, **caractérisé en ce que** l'élément unique (74) comporte un anneau (84) dont le diamètre intérieur correspond sensiblement au diamètre intérieur de la garniture (30, 32) en vis-à-vis de laquelle il s'étend, et des branches (76) qui s'étendent radialement depuis le diamètre extérieur de l'anneau (84) vers la périphérie extérieure de la garniture (30, 32).

11. Disque de friction (24) selon la revendication précédente, **caractérisé en ce que** l'une au moins des branches (76) s'étend en vis-à-vis d'une face latérale de portée (55) d'une partie périphérique de portée (54) d'une pale radiale (42).

12. Disque de friction (24) selon la revendication 10, **caractérisé en ce que** l'épaisseur des branches (76) est égale à la profondeur (P) des zones d'épaisseur réduite (72).

13. Disque de friction (24) selon la revendication 1, **caractérisé en ce que** l'élément de renfort (74) comporte un secteur de renfort (86) en appui contre au moins une partie de la zone d'épaisseur réduite (72), et au moins une patte de soutien (90) qui s'étend axialement à partir du secteur de renfort (86) en direction du voile (28) contre lequel elle prend appui de façon à améliorer l'homogénéité de la répartition des pressions sur la surface de frottement (34, 36) de la garniture de frottement (30, 32).

14. Disque de friction (24) selon la revendication précédente, **caractérisé en ce qu'**au moins une patte de soutien (98) prend appui sur la face latérale opposée à la face latérale de fixation (60) de la pale (42) en vis-à-vis.

15. Disque de friction (24) selon la revendication 13, **caractérisé en ce qu'**au moins une patte de soutien (100) prend appui sur la face latérale en vis-à-vis de la portion centrale (46) du voile radiale (28).

16. Disque de friction (24) selon la revendication 13, **caractérisé en ce que** la patte de soutien (90) est réalisée en matériau élastique de façon qu'elle subisse une déformation axiale, qui est fonction de l'effort axial exercé, par un plateau, sur la surface de frottement (34, 36) de la garniture (30, 32) en vis-à-vis.

17. Disque de friction (24) selon la revendication 13, **caractérisé en ce qu'**au moins une patte de soutien (90) est obtenue par découpage et/ou pliage de l'élément de renfort (74) à laquelle elle appartient.

18. Disque de friction (24) selon la revendication 1, **caractérisé en ce qu'**au moins l'une des garnitures (30, 32) est constituée d'un anneau continu.

19. Disque de friction selon la revendication 1, **caractérisé en ce que** les garnitures de frottement sont fixées par collage sur les parties centrales de fixation des pales.

20. Procédé de fabrication d'une garniture de frottement (30, 32), pour un disque de friction d'embrayage de véhicule automobile selon la revendication 1, **caractérisé en ce qu'**il comporte une étape de cuisson du matériau de friction de la garniture de frottement (30, 32) dans un moule dont la zone qui est en contact avec la surface de fixation (64, 66) de la garniture (30, 32) comporte au moins un bossage, de façon à réaliser au moins une zone d'épaisseur réduite (72) ou amincie.

21. Procédé selon la revendication précédente, **caractérisé en ce que** le matériau de friction est injecté dans le moule.

22. Procédé de fabrication d'une garniture de frottement (30, 32), pour un disque de friction (24) d'embrayage de véhicule automobile selon la revendication 1, **caractérisé en ce qu'**il comporte une étape d'usinage de la face de fixation (64, 66) de la garniture (30, 32) de façon à réaliser au moins une zone d'épaisseur réduite (72) ou amincie.

23. Procédé de fabrication selon la revendication 20, **caractérisé en ce qu'**au moins un élément de renfort (74) est fixé sur un élément du disque de friction (24).

24. Procédé de fabrication selon la revendication précédente, **caractérisé en ce qu'**au moins un élément de renfort (74) est fixé sur le voile de support (28).

25. Procédé de fabrication selon la revendication 23, **caractérisé en ce qu'**au moins un élément de renfort (74) est fixé sur la garniture de frottement (30, 32).

26. Procédé de fabrication selon la revendication précédente, **caractérisé en ce que** la garniture de frottement (30, 32) est réalisée par surmoulage autour d'un élément de renfort (74).

27. Procédé de fabrication selon la revendication 23, **caractérisé en ce qu'**au moins un élément de renfort (74) est collé sur un élément du disque de friction (24).

## Claims

1. Friction disc (24) comprising a support body (28) in the form of an annular washer comprising a central portion (46) and a peripheral outer portion which is divided up into radial blades (42) which have a central securing part (44) which is connected to the central portion (46) of the body (28) by means of a tangential fold (48) which forms the foot of the blade (42) and permits axial offsetting of the central securing part (44) relative to the general plane of the central portion (46) of the body (28), and comprising friction linings (30, 32) on both sides of the peripheral outer portion (40), each friction lining (30, 32) comprising an outer friction surface (34, 36) and an inner securing surface (64, 66), one securing area (62) of which is secured to at least one lateral securing surface (60) of a central part (44) of a radial blade (42) which is offset axially in the direction of the said friction lining (30, 32), **characterised in that** a securing surface (64, 66) of a friction lining (30, 32) comprises an area of reduced or narrowed thickness (72), in an area distinct from the securing areas (62), such as to reduce locally the axial thickness of the friction lining (30, 32), and **in that** at least one reinforcement element (74) extends opposite at least one part of an area of reduced thickness (72) of the friction lining (30, 32), such as to assist the homogeneous distribution of the pressures on the friction surface (34, 36) of the lining (30, 32) when it is thrust axially by a complementary plate.

2. Friction disc (24) according to claim 1, **characterised in that** at least one of the radial blades (42) has in addition to the central part (44) at least one peripheral support part (54), a lateral support surface (55) of which is supported in a support area (68) of the inner surface of a lining (32, 30) which is opposite the lining (30, 32), on the inner surface (64, 66) of which there is secured the lateral securing surface (60) of the central part (44) of the radial blade (42).

3. Friction disc according to claim 2, **characterised in that** the areas of reduced thickness (72) correspond to an annular area (80) which extends from the inner periphery of the securing surfaces (64, 66) of the friction linings (30, 32) towards the exterior, as far as the securing areas (62).

4. Friction disc according to claim 3, **characterised in that** the width (L1) of the annular area (80) corresponds substantially to a third of the width (L2) of the friction linings (30, 32).

5. Friction disc (24) according to claim 3, **characterised in that** the areas of reduced thickness (72) also comprise ring portions (82) which extend between the securing areas (62) from the annular area (80) as far as the outer periphery of the securing surfaces (64, 66) of the friction linings (30, 32).

6. Friction disc (24) according to claim 1, **characterised in that** the reinforcement element (74) is made from a material such as steel or a plastic material, the mechanical characteristics of which are better than those of the friction material of the friction linings (30, 32).

7. Friction disc (24) according to claim 3, **characterised in that** the reinforcement element (74) extends at least partially opposite a lateral support surface (55) of a peripheral part (54) of a radial blade (42).

8. Friction disc (24) according to claim 7, **characterised in that** at least one reinforcement element (74) extends substantially opposite the inner periphery of the inner surface (64, 66) of at least one friction lining (30, 32).

9. Friction disc (24) according to claim 8, **characterised in that** a plurality of reinforcement elements (74) which are arranged between the inner surface (64, 66) of a lining (30, 32) and the support body (28) are connected to one another in order to constitute a single element (74).

10. Friction disc (24) according to the preceding claim, **characterised in that** the single element (74) comprises a ring (84), the inner diameter of which corresponds substantially to the inner diameter of the lining (30, 32) opposite which it extends, and branches (76) which extend radially from the outer diameter of the ring (84) to the outer periphery of the lining (30, 32).

11. Friction disc (24) according to the preceding claim, **characterised in that** at least one of the branches (76) extends opposite a lateral support surface (55) of a peripheral support part (54) of a radial blade (42).

12. Friction disc (24) according to claim 10, **characterised in that** the thickness of the branches (76) is equal to the depth (P) of the areas of reduced thickness (72).

13. Friction disc (24) according to claim 1, **characterised in that** the reinforcement element (74) comprises a reinforcement section (86) which is supported against at least one part of the area of reduced thickness (72), and at least one support lug (90) which extends axially from the reinforcement section (86) in the direction of the body (28), against which it is supported such as to improve the homogeneousness of the distribution of the pressures on the friction surface (34, 36) of the friction lining (30, 32).

14. Friction disc (24) according to the preceding claim, **characterised in that** at least one support lug (98) is supported on the lateral surface opposite the lateral securing surface (60) of the blade (42) opposite.

15. Friction disc (24) according to claim 13, **characterised in that** at least one support lug (100) is supported on the lateral surface opposite, of the central portion (46) of the radial body (28).

16. Friction disc (24) according to claim 13, **characterised in that** the support lug (90) is made of a resilient material, such that it undergoes axial deformation, which is dependent on the axial force exerted by a plate on the friction surface (34, 36) of the lining (30, 32) opposite.

17. Friction disc (24) according to claim 13, **characterised in that** at least one support lug (90) is obtained by cutting out and/or folding of the reinforcement element (74) to which it belongs.

18. Friction disc (24) according to claim 1, **characterised in that** at least one of the linings (30, 32) consists of a continuous ring.

19. Friction disc according to claim 1, **characterised in that** the friction linings are secured by being glued onto the central securing parts of the blades.

20. Method for production of a friction lining (30, 32) for a friction disc according to claim 1, for a clutch of a motor vehicle, **characterised in that** it comprises a step of firing of the friction material of the friction lining (30, 32) in a mould, the area of which that is in contact with the securing surface (64, 66) of the lining (30, 32) comprises at least one boss, such as to provide at least one area of reduced or narrowed thickness (72).

21. Method according to the preceding claim, **characterised in that** the friction material is injected into the mould.

22. Method for production of a friction lining (30, 32) for a friction disc (24) according to claim 1, for a clutch of a motor vehicle, **characterised in that** it comprises a step of machining the securing surface (64, 66) of the lining (30, 32), such as to provide at least one area of reduced or narrowed thickness (72).

23. Production method according to claim 20, **characterised in that** at least one reinforcement element (74) is secured to an element of the friction disc (24).

24. Production method according to the preceding claims, **characterised in that** at least one reinforcement element (74) is secured to the support unit (28).

25. Production method according to claim 23, **characterised in that** at least one reinforcement element (74) is secured to the friction lining (30, 32).

26. Production method according to the preceding claim, **characterised in that** the friction lining (30, 32) is produced by over-moulding around a reinforcement element (74).

27. Production method according to claim 23, **characterised in that** at least one reinforcement element (74) is glued onto an element of the friction disc (24).

## Patentansprüche

1. Reibscheibe (24), umfassend eine ringförmige Trägerscheibe (28) mit einem Mittelteil (46) und einem äußeren Umfangsteil, der in radiale Segmente (42) unterteilt ist, welche einen mittleren Befestigungsbereich (44) aufweisen, der mit dem Mittelteil (46) der Scheibe (28) durch einen tangentialen Knick (48) verbunden ist, welcher den Fuß des Segments (42) bildet und einen axialen Versatz des mittleren Befestigungsbereichs (44) relativ zur Gesamtebene des Mittelteils (46) der Scheibe (28) erlaubt, und umfassend Reibbeläge (30, 32) auf beiden Seiten des äußeren Umfangsteils (40), wobei jeder Reibbelag (30, 32) eine äußere Reiboberfläche (34, 36) und eine innere Befestigungsoberfläche (64, 66) aufweist, wovon eine Befestigungszone (62) auf mindestens einer seitlichen Befestigungsfläche (60) von einem Mittelbereich (44) eines radialen Segments (42) befestigt ist, welcher axial in Richtung des besagten Reibbelags (30, 32) versetzt ist, **dadurch gekennzeichnet, dass** eine Befestigungsoberfläche (64, 66) von einem Reibbelag (30, 32) eine Zone mit reduzierter Dicke (72) oder eine Verdünnung in einer von den Befestigungszonen (62) verschiedenen Zone aufweist, um örtlich die axiale Dicke des Reibbelags (30, 32) zu reduzieren, und dass wenigstens ein Verstärkungselement (74) sich gegenüber von mindestens einem Teil einer Zone mit reduzierter Dicke (72) des Reibbelags (30, 32) erstreckt, um die homogene Verteilung der Drücke auf die Reiboberfläche (34, 36) des Belags (30, 32) zu begünstigen, wenn er durch eine komplementäre Platte axial beaufschlagt ist.

2. Reibscheibe (24) nach Anspruch 1, **dadurch gekennzeichnet, dass** mindestens ein radiales Segment (42) zusätzlich zu dem mittleren Bereich (44) mindestens einen am Umfang liegenden Tragbereich (54) aufweist, von dem eine seitliche Tragfläche (55) in Anlage auf einer Tragzone (68) der inneren Oberfläche von einem Belag (32, 30) kommt, der entgegengesetzt von dem Belag (30, 32) ist auf dessen innerer Oberfläche (64, 66) die seitliche Befestigungsfläche (60) des Mittelbereichs (44) des radialen Segments (42) befestigt ist.

3. Reibscheibe nach Anspruch 2, **dadurch gekennzeichnet, dass** die Zonen mit reduzierter Dicke (72) einer ringförmigen Zone (80) entsprechen, welche sich entlang des inneren Umfangs der Befestigungsoberflächen (64, 66) der Reibbeläge (30, 32) nach außen bis an die Befestigungszonen (62) erstreckt.

4. Reibscheibe nach Anspruch 3, **dadurch gekennzeichnet, dass** die Breite (L1) der Ringzone (80) in etwa einem Drittel der Breite (L2) der Reibbeläge (30, 32) entspricht.

5. Reibscheibe (24) nach Anspruch 3, **dadurch gekennzeichnet, dass** die Zonen mit reduzierter Dicke (72) außerdem Ringabschnitte (82) aufweisen, die sich zwischen den Befestigungszonen (62) entlang der ringförmigen Zone (80) bis zum äußeren Umfang der Befestigungsoberflächen (64, 66) der Reibbeläge (30, 32) erstrecken.

6. Reibscheibe (24) nach Anspruch 1, **dadurch gekennzeichnet, dass** das Verstärkungselement (74) aus einem Material wie Stahl oder Kunststoff gefertigt ist, dessen mechanischen Eigenschaften höherwertig sind als die des Reibmaterials der Reibbeläge (30, 32).

7. Reibscheibe (24) nach Anspruch 3, **dadurch gekennzeichnet, dass** das Verstärkungselement (74) sich zumindest teilweise gegenüber einer seitlichen Tragfläche (55) eines Umfangsbereichs (54) von einem radialen Segment (42) erstreckt.

8. Reibscheibe (24) nach Anspruch 7, **dadurch gekennzeichnet, dass** sich zumindest ein Verstärkungselement (74) in etwa gegenüber des inneren Umfangs der inneren Oberfläche (64, 66) von mindestens einem Reibbelag (30, 32) erstreckt.

9. Reibscheibe (24) nach Anspruch 8, **dadurch gekennzeichnet, dass** mehrere zwischen der inneren Oberfläche (64, 66) eines Belags (30, 32) und der Trägerscheibe (28) angeordnete Verstärkungselemente (74) miteinander verbunden sind, um ein Einzelelement (74) zu bilden.

10. Reibscheibe (24) nach dem vorherigen Anspruch, **dadurch gekennzeichnet, dass** das Einzelelement (74) einen Ring (84) umfasst, dessen Innendurchmesser in etwa dem Innendurchmesser des Belags (30, 32) entspricht gegenüber dem er sich erstreckt, sowie Arme (76), die sich radial vom Außendurchmesser des Rings (74) zum Außenumfang des Belags (30, 32) erstrecken.

11. Reibscheibe (24) nach dem vorherigen Anspruch, **dadurch gekennzeichnet, dass** mindestens ein Arm (76) sich gegenüber einer seitlichen Tragfläche (55) von einem am Umfang liegenden Tragbereich (54) eines radialen Segments (42) erstreckt.

12. Reibscheiben (24) nach Anspruch 10, **dadurch gekennzeichnet, dass** die Dicke der Arme (76) gleich der Tiefe (P) der Zonen (72) mit reduzierter Dicke ist.

13. Reibscheibe (24) nach Anspruch 1, **dadurch gekennzeichnet, dass** das Verstärkungselement (74) einen Verstärkungssektor (86) in Anlage gegen mindestens einen Teil der Zone (72) mit reduzierter Dicke, sowie mindestens eine Stützlasche (90) aufweist, die sich ausgehend vom Verstärkungssektor (86) in Richtung zur Scheibe (28) erstreckt, gegen die sie anliegt, um die Homogenität der Druckverteilung auf der Reiboberfläche (34, 36) des Reibbelags (30, 32) zu verbessern.

14. Reibscheibe (24) nach dem vorherigen Anspruch, **dadurch gekennzeichnet, dass** mindestens eine Stützlasche (98) auf der Seitenfläche aufliegt, welche entgegengesetzt zu der seitlichen Befestigungsfläche (60) des gegenüberliegenden Segments (42) ist.

15. Reibscheibe (24) nach Anspruch 13, **dadurch gekennzeichnet, dass** mindestens eine Stützlasche (100) auf der gegenüberliegenden Seitenfläche des Mittelteils (46) der radialen Scheibe (28) aufliegt.

16. Reibscheibe (24) nach Anspruch 13, **dadurch gekennzeichnet, dass** die Stützlasche (90) aus einem elastischen Material besteht, so dass sie eine axiale Verformung erfährt, die eine Funktion der axialen Belastung ist, welche durch eine Platte auf die Reiboberfläche (34, 36) des gegenüberliegenden Reibbelags (30, 32) ausgeübt wird.

17. Reibscheibe (24) nach Anspruch 13, **dadurch gekennzeichnet, dass** mindestens eine Stützlasche (90) durch Stanzen und/oder Biegen des Verstärkungselements (74), zu welchem sie gehört, erhalten wird.

18. Reibscheibe (24) nach Anspruch 1, **dadurch gekennzeichnet, dass** mindestens ein Belag (30, 32) aus einem durchgehenden Ring besteht.

19. Reibscheibe nach Anspruch 1, **dadurch gekennzeichnet, dass** die Reibbeläge durch Kleben auf den mittleren Befestigungsbereichen der Segmente befestigt sind.

20. Verfahren zur Herstellung eines Reibbelags (30, 32) für eine Kupplungsreibscheibe eines Kraftfahrzeugs nach Anspruch 1, **dadurch gekennzeichnet, dass** es eine Stufe zum Brennen des Reibmaterials des Reibbelags (30, 32) in einer Form umfasst, von der die Zone, welche mit der Befestigungsoberfläche (64, 66) des Belags (30, 32) in Kontakt kommt, wenigstens einen Vorsprung aufweist, um mindestens eine Zone (72) mit reduzierter Dicke oder eine Verdünnung zu erzielen.

21. Verfahren nach dem vorherigen Anspruch, **dadurch gekennzeichnet, dass** das Reibmaterial in die Form eingespritzt wird.

22. Verfahren zur Herstellung eines Reibbelags (30, 32) für eine Kupplungsreibscheibe (24) eines Kraftfahrzeugs nach Anspruch 1, **dadurch gekennzeichnet, dass** es eine Stufe einer spanenden Bearbeitung der Befestigungsfläche (64, 66) des Belags (30, 32) umfasst, um mindestens eine Zone (72) mit reduzierter Dicke oder eine Verdünnung zu erzielen.

23. Herstellungsverfahren nach Anspruch 20, **dadurch gekennzeichnet, dass** mindestens ein Verstärkungselement (74) auf einem Element der Reibscheibe (24) befestigt wird.

24. Herstellungsverfahren nach dem vorherigen Anspruch, **dadurch gekennzeichnet, dass** mindestens ein Verstärkungselement (74) auf der Trägerscheibe (28) befestigt wird.

25. Herstellungsverfahren nach Anspruch 23, **dadurch gekennzeichnet, dass** mindestens ein Verstärkungselement (74) auf dem Reibbelag (30, 32) befestigt wird.

26. Herstellungsverfahren nach dem vorherigen Anspruch, **dadurch gekennzeichnet, dass** der Reibbelag (30, 32) durch Aufformen auf ein Verstärkungselement (74) realisiert wird.

27. Herstellungsverfahren nach Anspruch 23, **dadurch gekennzeichnet, dass** mindestens ein Verstärkungselement (74) auf ein Element der Reibscheibe (24) aufgeklebt wird.
